Europäisches Patentamt

European Patent Office

Office européen des brevets

(19)

(11) Veröffentlichungsnummer : **0 130 386 B1**

(12) **EUROPÄISCHE PATENTSCHRIFT**

(45) Veröffentlichungstag der Patentschrift :
09.09.87

(21) Anmeldenummer : 84106201.1

(22) Anmeldetag : 30.05.84

(51) Int. Cl.⁴ : **H 01 G   1/14, H 01 G   1/10**

(54) **Kunststoffolien-Wickelkondensator.**

(30) Priorität : 03.06.83 DE 3320257

(43) Veröffentlichungstag der Anmeldung :
09.01.85 Patentblatt 85/02

(45) Bekanntmachung des Hinweises auf die Patenterteilung : 09.09.87 Patentblatt 87/37

(84) Benannte Vertragsstaaten :
AT BE CH DE FR GB IT LI LU NL SE

(56) Entgegenhaltungen :
EP-A- 0 162 149
DE-A- 1 554 811
DE-A- 3 134 617
GB-A- 1 335 159
US-A- 3 766 451
US-A- 4 004 200
US-A- 4 158 218
JEE Nov. 1982, Seiten 47-50, Y.Shibata "Building a
Better Aluminium Electrolytic Capacitor"

(73) Patentinhaber : **Westermann, Wolfgang**
**Schellingstrasse 7**
**D-6800 Mannheim 1 (DE)**

(72) Erfinder : **Westermann, Wolfgang**
**Schellingstrasse 7**
**D-6800 Mannheim 1 (DE)**

(74) Vertreter : **Altenburg, Udo, Dipl.-Phys. et al**
**Patent- und Rechtsanwälte Bardehle-Pagenberg-**
**Dost-Altenburg & Partner Postfach 86 06 20**
**D-8000 München 86 (DE)**

**Beschreibung**

Die vorliegende Erfindung betrifft einen Kunststoffolien-Wickelkondensator in Chip-Bauweise, insbesondere einen Flachwickelkondensator, gemäß Oberbegriff des Anspruchs 1 bzw. 2. Bei einem aus der DE-A-31 34 617 bekannten Kondensator dieser Art treten die Anschlußelemente an der Bodenseite aus der Umhüllung heraus und sind im Abstand von der Bodenseite nach innen abgewinkelt. Solche Kondensatoren haben eine hohe Bauform und werfen Probleme bei der mechanischen und elektrischen Kontaktierung auf einer Platine auf.

Kunststoffkondensatoren, insbesondere mit metallisierten Kunststoffolien sind bisher wegen der hohen Wärmebeanspruchungen beim Löten von bestückten Leiterplatten in der Praxis nicht als Chip-Bauelemente eingesetzt worden. Chip-Bauelemente müssen z. B. beim Tauchlöten beim direkten Kontakt des gesamten Bauelementekörpers mit flüssigem Lötzinn eine Temperaturbeanspruchung von ca. 250 °C über 5 Sek. aushalten.

Die Aufgabe der vorliegenden Erfindung ist darauf gerichtet, einen einfach aufgebauten, kostengünstig herstellbaren und auch unter den beim Löten auftretenden Wärmebeanspruchungen funktionssicheren Kunststoffolien-Wickelkondensator mit dimensionsstabilen und lötsicheren Anschlußelementen in Chip-Bauweise zu schaffen.

Dies wird bei einem Kunststoffolien-Wickelkondensator gemäß Oberbegriff des Anspruchs 1 bzw. 2 erfindungsgemäß durch die Merkmale des kennzeichnenden Teils des Anspruchs 1 bzw. 2 erreicht. Die erfindungsgemäße Anordnung des dritten Blechabschnittes der Anschlußelemente bringt einerseits den Vorteil mit sich, daß mehr lötfähige Fläche beim Lötvorgang zur Verfügung steht, wobei die Gefahr des Nichtlötens bzw. Abschattens klein gehalten werden kann. Andererseits wird durch diese Anordnung des dritten Blechabschnitts eine vergrößerte Länge des Anschlußweges zum Kondensatorwickel geschaffen, was die Wärmezufuhr erschwert und somit den Kondensatorwickel besser vor schädigenden Wärmeeinflüssen schützt.

Wenn die Schwall-Löttechnik zum elektrischen Anschließen des Kondensators auf einer Leiterplatte angewendet wird, wird erfindungsgemäß vorzugsweise ein Kondensator gemäß Anspruch 1 eingesetzt. Soll die Leitklebetechnik angewendet werden, so wird erfindungsgemäß vorzugsweise ein Kondensator gemäß Anspruch 2 verwendet. Bei Reflow-Löttechnik kann die eine oder andere Ausführungsform gemäß Anspruch 1 oder 2 Anwendung finden.

Durch die Anschlußelemente aus dünnem Blech, welches vorzugsweise 0,1 bis 0,5 mm stark ist, vorzugsweise im wesentlichen über die gesamte Breite und/oder Höhe der stirnseitigen Kontaktschicht, d. h. normalerweise der Schoopschicht eines metallisierten Kondensators, mit dieser verbunden ist, wird eine gute mechanische und elektrisch leitende Verbindung zur stirnseitigen Kontaktschicht erreicht, welche durch die Temperaturbeanspruchungen, die beim Löten auf gedruckten Schaltungen und Platinen auftreten, nicht negativ beeinträchtigt wird. Zwischen den Lagen eines Wickelkondensators eingeschlossene Luft und die Tendenz von gereckten Kunststoffolien, unter Temperaturbeanspruchung zu schrumpfen, führen bei den kurzzeitig hohen Temperaturen, die bei Berührung des flüssigen Lötmetalls mit dem Kondensatorkörper auftreten, zu einem Aufbeulen dieses Körpers. Durch den Einsatz einer Umhüllung aus unter Wärmeeinwirkung formstabil bleibendem Material, z. B. duroplastischen Kunststoffmaterialen wird der Kondensatorkörper einerseits vor der direkten Berührung mit dem Lötmetall geschützt. Andererseits wird durch die formstabile Umhüllung ein Gegendruck auf den zum Aufbauchen tendierenden Kondensatorkörper ausgeübt, wodurch nicht nur seine mechanischen, sondern auch seine elektrischen Eigenschaften gesichert werden. Schließlich bewirkt die formstabile Umhüllung durch ihre Masse und durch ihre flächige Verbindung mit den durch sie hindurchgehenden Anschlußelementen eine weitere Wärmeaufnahme und somit Ableitung der Lötwärme vom eigentlichen Kondensatorkörper.

Gemäß einer vorteilhaften Ausführungsform des erfindungsgemäßen Kondensators besteht das Blech der Anschlußelemente aus einem relativ schlecht wärmeleitenden Material z. B. Neusilber. Hierdurch wird in vorteilhafter Weise zusätzlich gewährleistet, daß der Kondensatorkörper aus wärmeempfindlichem Material den Temperaturbelastungen beim Tauchlöten ohne Funktionsbeeinträchtigungen widersteht.

Gemäß einer weiteren vorteilhaften Ausführungsform des erfindungsgemäßen Kondensators ist die Umhüllung allseitig gleichmäßig dick.

Der erfindungsgemäße Kunststoffolien-Wickelkondensator wird dadurch hergestellt, daß die Anschlußelemente in einem ersten Abschnitt auf die beiden Stirnseiten des nicht umhüllten Kondensatorkörpers derart aufgeschweißt oder aufgelötet werden, daß ein zweiter Abschnitt der Anschlußelemente abgewinkelt über die Stirnseiten übersteht, der kontaktierte Kondensatorkörper mit einer feuchtesicheren, unter Wärmeeinwirkung formstabilen Umhüllung versehen wird und die überstehenden, aus der Umhüllung heraustretenden Abschnitte der Anschlußelemente so positioniert werden, daß sie bei einer Leiterplattenbestückung die lötfähigen Anschlußabschnitte bilden.

Weitere Vorteile, Merkmale und Anwendungsmöglichkeiten der vorliegenden Erfindung ergeben sich aus der nachfolgenden Beschreibung von Ausführungsbeispielen in Verbindung mit der Zeichnung. Darin zeigen :

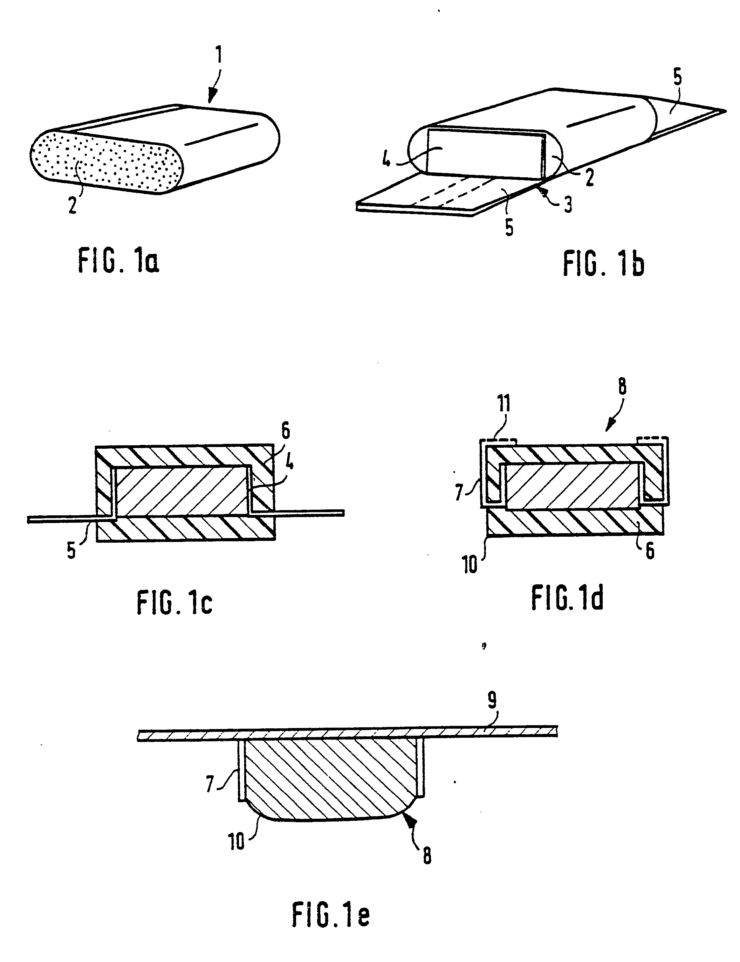

Figur 1a bis 1e schematische Darstellungen (teilweise perspektivisch, teilweise im Schnitt) eines Kunststoffolien-Wickelkondensators gemäß der Erfindung im Laufe seiner Herstellung und Montage auf einer Leiterplatte.

In Fig. 1a ist ein nackter Flachwickel-Kunststoffolienkondensatorkörper 1, z. B. mit metallisierten Kunststoffolien, mit Stirnseiten 2 dargestellt, auf denen sich Schoopschichten befinden. Wie aus Fig. 1b hervorgeht, wird an den stirnseitigen Schoopschichten jeweils ein Anschlußelement 3 aus einem dünnen Blech, z. B. in Neusilber, in einem ersten Abschnitt 4 im wesentlichen über die gesamte Breite und/oder Höhe der Schoopschicht angeschweißt bzw. angelötet. Ein zweiter Abschnitt 5 der Anschlußelemente 3 ist im vorliegenden Ausführungsbeispiel rechtwinklig zum ersten Abschnitt 4 der Anschlußelemente 3 nach außen abgewinkelt. Gestrichelt ist eine schmalere Ausführungsform des zweiten Abschnittes 5 dargestellt. Die Anschlußelemente können in sich mehrere unterschiedliche Breiten, vorzugsweise eine kleinere Breite im Übergangsbereich zwischen den inneren und äußeren Kontaktschichten zur Reduzierung der Wärmezufuhr, aufweisen. Außerdem können auch Anschlußelemente aus mehreren gesonderten Blechabschnitten verwendet werden, die auf der Schoopschicht kurzgeschlossen werden.

Anschließend wird der Kondensatorkörper 1 gemeinsam mit den ersten Abschnitten 4 der Anschlußelemente 3 mit einer Umhüllung 6 versehen, die vorzugsweise aus duroplastischen Kunststoffmaterialien wie z. B. ausgehärteten Epoxidharzpressmassen besteht und allseitig gleichmäßig dick ist. Wie aus der Schnittdarstellung der Fig. 1c hervorgeht, treten die zweiten Abschnitte 5 der Anschlußelemente 3 aus der Umhüllung 6 hervor. Abschließend werden die zweiten Abschnitte 5 der Anschlußelemente 3 nochmals um 90° in Richtung der längeren Höhenabmessung bzw. in Richtung der mit der Leiterplatte in Eingriff kommenden Unterseite des Kondensators umgebogen. Der so hergestellte Kondensator 8 ist in Fig. 1d, auf dem Kopf stehend, dargestellt.

In Fig. 1e ist schematisch eine Leiterplatte 9 mit nach unten angeordnetem Kondensator 8 gezeigt, der so durch ein Schwallötbad geführt wird. Um bei diesem Überkopflöten einen besseren Zugang der flüssigen Lötmetallwelle zu den Anschlußabschnitten 7 zu ermöglichen, sind die Oberkannten 10 des Kondensators 8 abgerundet.

Falls zum Kontaktieren der Kondensatoren die Leitklebetechnik (Aufkleben der Kondensatoren mit leitfähigen Epoxidharzen auf die Leiterplatte) bzw. Reflow-Löten (Wiederverflüssigen von auf der Leiterplatte aufgedruckter Lötpaste durch Wärme) verwendet werden soll, ist es zweckmäßig, die dritten Blechabschnitte 7 nochmals um 90° unter die Unterseite des Kondensators 8 - zu einem vierten Blechabschnitt 11 umzubiegen.

### Patentansprüche

1. Kunststoffolien-Wickelkondensator (8) in Chip-Bauweise, insbesondere Flachwickelkondensator, aus einem Kondensatorkörper (1) mit einer feuchtesicheren Umhüllung (6) und mit an den Stirnseiten (2) des Kondensatorkörpers (1) befestigten, aus dieser Umhüllung (6) heraustretenden Anschlußelementen (3) aus dünnem Blech, die in einem ersten Abschnitt (4) flächig mit der jeweiligen Stirnseite (2) des Kondensatorkörpers (1) verbunden sind und die in einem zweiten, aus der Umhüllung (6) heraustretenden Abschnitt (5) gegenüber der Stirnseite abgewinkelt sind, dadurch gekennzeichnet, daß der zweite Abschnitt (5) der Anschlußelemente (3) versetzt zur Höhenmitte des Kondensators (8) aus der Stirnseite der Umhüllung (6) heraustritt und in Richtung ihrer längeren Höhenabmessung zu einem dritten Abschnitt (7) abgewinkelt ist, der flächig an der Stirnseite der Umhüllung (6) anliegt und bündig mit der Unterkante des Kondensators (8) abschließt.

2. Kunststoffolien-Wickelkondensator (8) in Chip-Bauweise, insbesondere Flachwickelkondensator, aus einem Kondensatorkörper (1) mit einer feuchtesicheren Umhüllung (6) und mit an den Stirnseiten (2) des Kondensatorkörpers (1) befestigten, aus dieser Umhüllung (6) heraustretenden Anschlußelementen (3) aus dünnem Blech, die in einem ersten Abschnitt (4) flächig mit der jeweiligen Stirnseite (2) des Kondensatorkörpers (1) verbunden sind und die in einem zweiten, aus der Umhüllung (6) heraustretenden Abschnitt (5) gegenüber der Stirnseite abgewinkelt sind, dadurch gekennzeichnet, daß der zweite Abschnitt (5) der Anschlußelemente (3) versetzt zur Höhenmitte des Kondensators (8) aus der Stirnseite der Umhüllung (6) heraustritt und in Richtung ihrer längeren Höhenabmessung zu einem dritten Abschnitt (7) abgewinkelt ist, der flächig an der an der Stirnseite der Umhüllung (6) anliegt und senkrecht zur Stirnseite der Umhüllung (6) in einem vierten Abschnitt (11) unter die Unterseite des Kondensators (8) abgewinkelt ist.

3. Kondensator nach Anspruch 2, dadurch gekennzeichnet, daß der vierte Abschnitt (11) der Anschlußelemente (3) flächig an der Unterseite des Kondensators (8) anliegt.

4. Kondensator nach mindestens einem der Ansprüche 1 bis 3, dadurch gekennzeichnet, daß die Stirnseiten des Kondensatorkörpers mit mehreren getrennten Anschlußelementen verbunden sind.

5. Kondensator nach mindestens einem der Ansprüche 1 bis 4, dadurch gekennzeichnet, daß sich der erste Abschnitt (4) der Anschlußelemente (3) im wesentlichen über die gesamte Breite der Stirnseite (2) des Kondensatorkörpers (1) erstreckt.

6. Kondensator nach mindestens einem der Ansprüche 1 bis 5, dadurch gekennzeichnet, daß sich der erste Abschnitt (4) der Anschlußelemente (3) im wesentlichen über die gesamte Höhe der Stirnseite (2) des Kondensatorkörpers (1) erstreckt.

7. Kondensator nach mindestens einem der Ansprüche 1 bis 6, dadurch gekennzeichnet, daß die Umhüllung (6) allseitig gleichmäßig dick ist.

8. Kondensator nach mindestens einem der Ansprüche 1 bis 7, dadurch gekennzeichnet, daß die Oberkanten (10) der Umhüllung (6) des Kondensators (8) abgerundet sind.

9. Kondensator nach mindestens einem der Ansprüche 1 bis 8, dadurch gekennzeichnet, daß die Umhüllung aus einem unter Wärmeeinwirkung formstabil bleibendem duroplastischen Kunststoffmaterial besteht.

10. Kondensator nach mindestens einem der Ansprüche 1 bis 9, dadurch gekennzeichnet, daß das Blech der Anschlußelemente (3) 0,1 bis 0,5 mm stark ist.

11. Kondensator nach mindestens einem der Ansprüche 1 bis 10, dadurch gekennzeichnet, daß das Blech der Anschlußelemente (3) aus einem relativ schlecht wärmeleitenden Material, z. B. Neusilber, besteht.

**Claims**

1. A synthetic resin film wound capacitor (8) in chip configuration, particularly a flat wound capacitor formed by a capacitor body (1) comprising a moisture-proof casing (6) and connecting elements (3) made of thin sheet metal fastened to the frontal sides (2) of the capacitor body (1) and projecting through the casing (6), said connecting elements forming in a first part (4) an area connection with the corresponding frontal side (2) of the capacitor body (1) and being angled with respect to the frontal side in a second part (5) projecting through the casing (6), characterized in that the second part (5) of the connecting elements (3) projects through the frontal side of the casing (6) offset from the midheight of the capacitor (8) and is angled in the direction of its longer height dimension to a third part (7) lying flat against the frontal side of the casing (6) and terminating flush with the lower edge of the capacitor (8).

2. A synthetic resin film wound capacitor (8) in chip configuration, particularly a flat wound capacitor formed by a capacitor body (1) comprising a moisture-proof casing (6) and connecting elements (3) made of thin sheet metal fastened to the frontal sides (2) of the capacitor body (1) and projecting through the casing (6), said connecting elements forming in a first part (4) an area connection with the corresponding frontal side (2) of the capacitor body (1) and being angled with respect to the frontal side in a second part (5) projecting through the casing (6), characterized in that the second part (5) of the connecting elements (3) projects through the frontal side of the casing (6) offset from the midheight of the capacitor (8) and is angled in the direction of its longer height dimension to a third part (7) lying flat against the frontal side of the casing (2) and being angled perpendicularly to the frontal side of the casing (6) in a fourth part (11) back under the bottom side of the capacitor (8).

3. A capacitor according to claim 2, characterized in that the fourth part (11) of the connecting elements (3) lies flat against the bottom side of the capacitor (8).

4. A capacitor according to at least one of claims 1 to 3, characterized in that the frontal sides of the capacitor body are connected with several separate connecting elements.

5. A capacitor according to at least one of claims 1 to 4, characterized in that the first part (4) of the connecting elements (3) extends essentially over the entire width of the frontal side (2) of the capacitor body (1).

6. A capacitor according to at least one of claims 1 to 5, characterized in that the first part (4) of the connecting elements (3) extends essentially over the entire height of the frontal side (2) of the capacitor body (1).

7. A capacitor according to at least one of claims 1 to 6, characterized in that the casing (6) comprises a uniform thickness on all sides.

8. A capacitor according to at least one of claims 1 to 7, characterized in that the upper edges (10) of the casing (6) of the capacitor (8) are rounded.

9. A capacitor according to at least one of claims 1 to 8, characterized in that the casing is made of a thermosetting synthetic resin material retaining its shape under the effect of heat.

10. A capacitor according to at least one of claims 1 to 9, characterized in that the sheet metal of the connecting elements (3) has a thickness of from 0.1 to 0.5 mm.

11. A capacitor according to at least one of claims 1 to 10, characterized in that the sheet metal of the connecting elements (3) is made of a material relatively poorly conducting heat, for example nickel silver.

**Revendications**

1. Condensateur bobiné à feuilles en matières plastiques (8) pour circuit imprimé, notamment condensateur bobiné à plat comportant un corps de condensateur (1) avec une enveloppe (6) résistant à l'humidité et des éléments de connexion (3) en tôle mince, fixés sur les faces frontales (2) du corps de condensateur (1) et ressortant de l'enveloppe (6), qui sont reliés dans un premier tronçon (4) sur toute leur surface à la face frontale (2) du corps de condensateur (1) et qui dans un deuxième tronçon (5) ressortant de l'enveloppe (6) sont coudés par rapport à la face frontale, caractérisé en ce que le deuxième tronçon (5) des éléments de connexion (3) ressort de la face frontale de l'enveloppe (6), décalé par rapport au milieu de la hauteur du condensateur (8), et est coudé dans la direction de sa plus grande hauteur pour former un troisième tronçon (7) dont la surface s'applique contre la face frontale de l'enveloppe (6) et qui vient à fleur du bord inférieur du condensateur (8).

2. Condensateur bobiné à feuilles en matières plastiques (8) pour circuit imprimé notamment condensateur bobiné à plat comportant un corps de condensateur (1) avec une enveloppe (6) résistant à l'humidité et des éléments de connexion (3) en tôle mince fixés sur les faces frontales (2) du corps de condensateur (1) ressortant de l'enveloppe (6), qui sont reliés dans un premier tronçon (4) à plat à la face frontale (2) du corps de condensateur (1), et qui dans un deuxième tronçon (5) ressortant de l'enveloppe (6) sont coudés par rapport à la face frontale, caractérisé en ce que le deuxième tronçon (5) des éléments de connexion (3) ressort de la face frontale de l'enveloppe (6) décalé par rapport à la moitié de la hauteur du condensateur (8) et est coudé dans la direction de sa plus grande hauteur pour former un troisième tronçon (7) dont la surface s'applique contre la face frontale de l'enveloppe (6) et qui est coudé perpendiculairement à la face frontale de l'enveloppe (6) pour former un quatrième tronçon (11) sous la face inférieure du condensateur (8).

3. Condensateur selon la revendication 2, caractérisé en ce que le quatrième tronçon (11) des éléments de connexion (3) s'applique par sa surface contre la face inférieure du condensateur (8).

4. Condensateur selon une au moins des revendications 1 à 3, caractérisé en ce que les faces frontales du corps du condensateur sont reliées par plusieurs éléments de connexion séparés.

5. Condensateur selon une au moins des revendications 1 à 4, caractérisé en ce que le premier tronçon (4) des éléments de connexion (3) s'étend essentiellement sur toute la largeur de la face frontale (2) du corps de condensateur (1).

6. Condensateur selon une au moins des revendications 1 à 5, caractérisé en ce que le premier tronçon (4) des éléments de connexion (3) s'étend essentiellement sur toute la hauteur de la face frontale (2) du corps de condensateur (1).

7. Condensateur selon une au moins des revendications 1 à 6, caractérisé en ce que l'enveloppe (6) présente une épaisseur constante sur toutes ses faces.

8. Condensateur selon une au moins des revendications 1 à 7, caractérisé en ce que les bords supérieurs (10) de l'enveloppe (6) du condensateur (8) sont arrondis.

9. Condensateur selon une au moins des revendications 1 à 8, caractérisé en ce que l'enveloppe est faite dans une matière plastique thermodurcissable indéformable à la chaleur.

10. Condensateur selon une au moins des revendications 1 à 9, caractérisé en ce que l'épaisseur de la tôle des éléments de connexion (3) est comprise entre 0,1 et 0,5 mm.

11. Condensateur selon une au moins des revendications 1 à 10, caractérisé en ce que la tôle des éléments de connexion (3) est faite dans une matière relativement mauvaise conductrice de chaleur, par exemple en cupronickel.

FIG. 1a

FIG. 1b

FIG. 1c

FIG.1d

FIG.1e